# EUROPEAN PATENT SPECIFICATION

(11) **EP 1 196 619 B1**
(45) Date of publication and mention of the grant of the patent: **30.11.2005**
(21) Application number: 00938470.2
(22) Date of filing: 26.06.2000
(51) Int. Cl.: C12P 7/06, C12F 3/00

(54) **THE METHOD OF ETHANOL PRODUCTION WITHOUT THE RISE OF DISTILLER'S STILLAGE**
ETHANOLHERSTELLUNGSVERFAHREN OHNE DESTILLATIONSSCHLEMPEPRODUKTION
PRODUCTION D'ETHANOL SANS AUGMENTATION DE LA VINASSE DE DISTILLERIE

(30) Priority: 01.07.1999 CZ 238999
(43) Date of publication of application: 17.04.2002
(73) Proprietor: Sasek, Karel, 130 00 Praha 3 (CZ)
(72) Inventor: Sasek, Karel, 130 00 Praha 3 (CZ)
(74) Representative: Jeck, Anton
(86) International application number: PCT/CZ2000/000047
(87) International publication number: WO 2001/002535

(56) References cited:
- FR-A- 2 442 887
- US-A- 4 092 434
- US-A- 4 306 023

## Description

### The Area of Technique

The invention concerns the method of ethanol production without the rise of distiller's stillage from agricultural products such as grain, sugar-beet or potatoes.

### The State of Technique

The fermented mash was until now conveyed to the distillation, i.e. to the mash column, where all the ethanol was boiled down, that also includid in the solid phase of treated raw material. But it led to the destruction of yeats and to the escape of very valuable materials such as proteins and vitamines, to the solution, from where they are very difficult to get back. The risen distiller's stillage were usually added to bulky fodders for cattle. But the great propensity of the distiller's stillage to destruction limits this utilization. Recently, the distiller's stillage are being poured out to the fields.

Nowadays, there is a technique being used in France, that thickens the distiller's stillage in a cascade of evaporators approximately to 25% of dry matter. Afterwards, grain groats are added, causing the risen very viscose liquid to thicken and making its further drying and granulation possible.

### The Nature of Invention

The method of ethanol production, according to the presented invention, processes the agricultural products such as grain, sugar-beet and/or potatoes. The grinded grain is first mixed with water and after the addition of liquifying and saccharifying enzyme, the risen mash is submitted to fermentation, the sliced sugar-beet is submitted to fermentation and the crush potatoes after the saccharifying of the starch, like in case of the grain. When using this method, the solid part is worked to the fodder for farming animals.

The nature of this invention consists in that the fermented mash is being filtred under the condition of overpressure on the side of suspension, the filtrate is conveyed to distilation and the filter cake is predried in the drier with a temperature that is higher than the boiling-water temperature, given the pressure used. By predrying ejected reminders of water and ethanol are conveyed away from the drier for cooling down and liquifying. After that, they are conveyed to distillation. The filter cake without the ethanol is dried in the end-drier.

In the advantageous practise, the filter cake is rinsed with water after the filtration, and the liquid phase is pushed out using inert gas. There is an atmosphere of inert gas being maintained in the drier during predrying.

During the production of ethanol of food quality the water solution of the ethanol reminders, which is acquired during predrying, after being cooled down and liquified, is conveyed to the distillation in an fusel column of technical ethanol.

During the production of ethanol of non-food quality the acquired solution of the reminders of ethanol is mixed with the filtrat.

In an alternate problem solution the grinded grain straw is added to the fermented mash in a proportion of max. 15% of the weight.

The advantage of the proposed problem solution is the removal of the rise of distiller's stillage, which enables the development of surplus agricultural products processing and the use of the ethanol made as an addition to the fuel for engine vehicles.

Another advantage is the possibility of the single recirculation of the water used for production. It reduces the amount of water needed for production to one half and it reduces the amount of the outlet water to one half as well.

The problem solution reduces the losses of the valuable materials contained in yeats, such as proteins and vitamines.

During the suggested method, the solid phase are not exposed to the high temperature and the the time of the exposure is shorter. This avoids the deep destruction of materials such as proteins and vitamines as it was the case during the existing processes.

The next advantage is, that the process of the acquisition of the dry matter of insoluble phase from the agricultural materials is investively cheaper and technologically simplier than the processes known until now.

### Examples of Performing of the Invention

### Example No. 1

The mixture of grain (wheat, rye, barley in proportion 1:1:1) is grinded and mixed with water of 50°C temperature, where the liquifying enzyme is added in. The temperature of water was acquired by mixing the boiling water, leaving from the mash column, with fresh water. The mixture is being heated with direct steam to the temperature 70°C. After a pause of aproximately 10 minutes lenght, the mixture is cooled down to temperature of 55°C, and saccharifying enzyme is added. After another pause, the mixture is cooled down to the inocolum temperature, which is 27°C, and is conveyed to ferment tank. The from the fermentation process escaping carbon dioxide is watered in the column with cold water. The scrubbed carbon dioxide from the first fermentation phase is released to the atmosphere and the scrubbed carbon dioxide from the second fermentation phase (the second scrubbing column) is collected for future use. Fermented mash is filtred through the filter press and is conveyed to distillation.

The filter cake is washed the water used for scrubbing of carbon dioxide heated to the temperature of 35°C, next the liquid is pushed from the filter cake using carbon dioxide, and this share is being added to the filtrat. Next, the filter cake is then moved to the disk drier, that works with lowered pressure and in an inert atmosphere of carbon dioxide and where share of ethanol, that was kept in the solid phase, is removed and the content of water is reduced to approximately 40% of the weight. After liquifying of the streams and separation of carbon dioxide is the solution of ethanol being drawn to the column of technical ethanol, i.e. to the fusel column. The predried cake is conveyed to the shelf drier, where it is dried to a water content of approximately 10% of the weight, suitable for further processing.

### Example No. 2

The sliced sugar-beet is heat with direct steam to a temperature of 27°C; it can also be mixed with water so that the content of saccharose is 15% of veight. Next, it is conveyed to the fermentation tank and is inoculated and fermented. The escaping carbon dioxide is scrubbed and caught. During secondary fermentation, the grinded straw is added to the mash in a proportion of max. 15% of weight. The next process is the same as the example no. 1, with the difference that the ethanol is determined to next production as the fuel addition, that is why the liquid streams of ethanol and water from the disk drier are mixed with filtrat.

### Industrial Application

The problem solution according to the invention can be used in destillary, with advantage for processing of surplus agricultural materials.

## Claims

1. A method of ethanol production without the rise of distiller's stillage from grain and/or sugar-beet and/or potatoes, where ground grain is first mixed with water and after addition of liquifying and saccharifying enzymes, the risen mash is submitted to fermentation, sliced sugar-beet is submitted to fermentation and crushed potatoes are submitted to fermentation after the saccharifying of starch as in case of grain, **characterized by**, that the fermented mash is being filtered under the condition of overpressure on the side of suspension, the filtrate is conveyed to distillation and the filter cake is predried in drier in temperature higher than the temperature of boiling water given the pressure used, from where the by predrying ejected reminders of ethanol with water are conveyed to further cooling down, liquifying and to distillation, while the filter cake without ethanol is being dried in the end-drier.

2. The method of ethanol production without the rise of distiller's stillage according to the claim 1 **characterized by**, that the filter cake is washed with water before being placed in the drier and the liquid phase is pushed out with an inert gas.

3. The method of ethanol production without the rise of distiller's stillag according to the claims 1 and 2, **characterized by**, that during the production of ethanol of food quality the water solution of reminder of ethanol acquired by predrying, cooling down and liquifying, is conveyed to distillation to the fusel column of the technical ethanol.

4. The method of ethanol production without the rise of distiller's stillage according to the claims 1 and 2, **characterized by**, that during the production of ethanol of non-food quality the water solution of reminder of ethanol acquired by predrying, cooling down and liquifying, is being mixed with the filtrate.

5. The method of ethanol production without the rise of distiller's stillage according to the claims 1 and 2 and 3 or 4, **characterized by**, that grinded grain straw is added to the fermented mash in a proportion of max. 15% of the weight.

6. The method of ethanol production without the rise of distiller's stillage according to the claim 1, **characterized by**, that an inert gas atmosphere is being maintained in the drier during predrying.

## Patentansprüche

1. Verfahren zur Herstellung von Ethanol ohne Zunahme der Destillationsschlempe aus Korn und/oder Zuckerrüben und/oder Kartoffeln, wobei zunächst gemahlenes Korn mit Wasser gemischt und dann nach Zugabe von verflüssigenden und verzuckernden Enzymen die entstandene Masse der Fermentation unterzogen wird, die geschnittenen Zuckerrüben der Fermentation unterzogen werden und die zerkleinerten Kartoffeln der Fermentation unterzogen werden nach der Verzuckerung der Stärke wie im Fall von Korn,
**dadurch gekennzeichnet,**
**dass** die fermentierte Masse unter der Bedingung eines Überdrucks auf der Aufschlämmungsseite gefiltert wird, dass das Filtrat zur Destillation befördert wird, dass der Filterkuchen in einem Trockner bei einer Temperatur, die höher als die von kochendem Wasser bei dem verwendeten Druck ist, vorgetrocknet wird und dass die durch das Vortrocknen freigesetzten Ethanolreste mit Wasser zur weiteren Abkühlung, Verflüssigung und Destillation gebracht werden, während der Filterkuchen ohne Ethanol in einem Endtrockner getrocknet wird.

2. Verfahren nach Anspruch 1,
**dadurch gekennzeichnet,**
**dass** der Filterkuchen mit Wasser gewaschen wird, bevor er dem Trockner zugeführt wird, und dass die Flüssigphase mit einem inaktiven Gas ausgetrieben wird.

3. Verfahren nach den Ansprüchen 1 und 2,
**dadurch gekennzeichnet,**
**dass** während der Herstellung von Ethanol mit Nahrungsmittelqualität die Wasserlösung des Ethanolrestes, der durch das Vortrocknen, Abkühlen und Verflüssigen erzielt wird, zur Destillation zur Fuselkolonne des technischen Ethanols gebracht wird.

4. Verfahren nach den Ansprüchen 1 und 2,
**dadurch gekennzeichnet,**
**dass** während der Herstellung von Ethanol ohne Nahrungsmittelqualität die Wasserlösung des Ethanolrestes, der durch das Vortrocknen, Abkühlen und Verflüssigen erzielt wird, mit dem Filtrat gemischt wird.

5. Verfahren nach den Ansprüchen 1 und 2 und 3 oder 4,
**dadurch gekennzeichnet,**
**dass** gemahlenes Kornstroh zur fermentierten Masse in einem Verhältnis von maximal 15 Gew.-% zugegeben wird.

6. Verfahren nach den Anspruch 1,
**dadurch gekennzeichnet,**
**dass** eine inaktive Gasathmosphäre im Trockner während der Vortrocknung aufrecht erhalten wird.

## Revendications

1. Procédé de production d'éthanol sans augmentation de la vinasse de distillerie à partir de grain et/ou de betterave à sucre et/ou de pommes de terre, où du grain moulu est tout d'abord mélangé avec de l'eau et après addition des enzymes liquéfiantes et saccharisantes, la pâte levée est soumise à la fermentation, la betterave à sucre tranchée est soumise à la fermentation et les pommes de terre écrasées sont soumises à la fermentation après la saccharification de l'amidon comme dans le cas du grain, **caractérisé en ce que** la pâte fermentée est filtrée dans des conditions de surpression sur le côté de la suspension, le filtrat est amené à distillation et le gâteau de filtration est préséché dans un séchoir à une température supérieure à la température d'ébullition de l'eau en fonction de la pression utilisée, à partir d'où les reliquats extraits du préséchage de l'éthanol avec de l'eau sont amenés à un refroidissement, une liquéfaction supplémentaire et à distillation, tandis que le gâteau de filtration sans éthanol est séché dans le séchoir final.

2. Procédé de production d'éthanol sans augmentation de la vinasse de distillerie selon la revendication 1 **caractérisé en ce que** le gâteau de filtration est lavé avec de l'eau avant d'être placé dans le séchoir et la phase liquide est évacuée avec un gaz inerte.

3. Procédé de production d'éthanol sans augmentation de la vinasse de distillerie selon les revendications 1 et 2 **caractérisé en ce que** durant la production d'éthanol de qualité alimentaire la solution d'eau du reliquat d'éthanol obtenue par préséchage, refroidissement et liquéfaction est amenée à distillation dans la colonne d'éthanol technique.

4. Procédé de production d'éthanol sans augmentation de la vinasse de distillerie selon les revendications 1 et 2 **caractérisé en ce que** durant la production d'éthanol de qualité non alimentaire la solution d'eau du reliquat d'éthanol obtenue par préséchage, refroidissement et liquéfaction est mélangée avec le filtrat.

5. Procédé de production d'éthanol sans augmentation de la vinasse de distillerie selon les revendications 1 et 2 et 3 ou 4 **caractérisé en ce que** de la paille de grain broyée est ajoutée à la pâte fermentée dans une proportion maximum de 15% en poids.

6. Procédé de production d'éthanol sans augmentation de la vinasse de distillerie selon la revendication 1 **caractérisé en ce qu'**une atmosphère de gaz inerte est maintenue dans le séchoir durant le préséchage.
